# FASCICULE DE BREVET EUROPEEN

(11) **EP 3 599 345 B1**
(45) Date de publication et mention de la délivrance du brevet: **29.12.2021**
(21) Numéro de dépôt: 19188199.4
(22) Date de dépôt: 24.07.2019
(51) Int. Cl.: F04D 29/16, F01D 11/00, F01D 5/14, F04D 29/54

(54) **AILETTES ENTREFER POUR COMPRESSEUR DE TURBOMACHINE**
LUFTSPALTSCHAUFELN FÜR DEN VERDICHTER EINES TURBOTRIEBWERKS
AIR GAP AIRFOILS FOR A TURBINE ENGINE COMPRESSOR

(30) Priorité: 24.07.2018 FR 1856864
(43) Date de publication de la demande: 29.01.2020
(73) Titulaire: SAFRAN AIRCRAFT ENGINES, 75015 Paris (FR)
(72) Inventeur: GUEGAN, Damien Bernard Emeric, 77550 Moissy-Cramayal (FR); COCHON, Sébastien Claude, 77550 Moissy-Cramayal (FR); RETIVEAU, Pierre-Hugues Ambroise Maxime Victor, 77550 Moissy-Cramayal (FR)
(74) Mandataire: Ernest Gutmann - Yves Plasseraud S.A.S.

(56) Documents cités:
- EP-A2- 2 138 727
- WO-A1-2011/148101
- US-A- 5 211 533
- US-A1- 2013 318 982
- US-A1- 2014 010 638

## Description

### DOMAINE

La présente invention concerne un étage d'aubes destinée à être monté dans un compresseur d'une turbomachine à double flux notamment.

### CONTEXTE

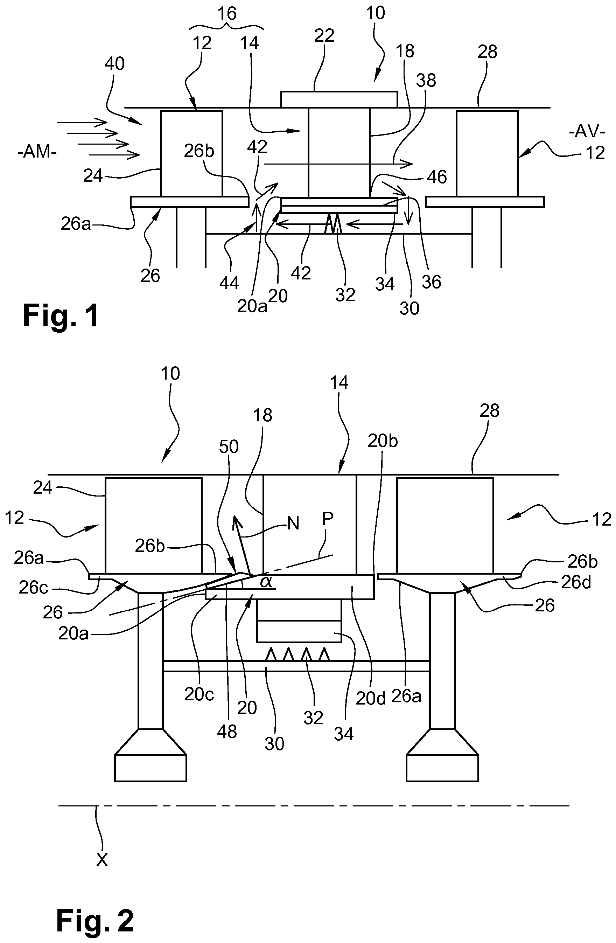

Classiquement, un compresseur 10 comprend une alternance axiale de rangées annulaires d'aubes mobiles 12 et de rangées annulaires d'aubes de stator 14. On définit ainsi un étage de compression 16 comme comprenant une rangée annulaire d'aubes mobiles 12 amont suivie d'une rangée annulaire d'aubes de stator 14 aval. Chaque rangée annulaire d'aubes de stator 14 comprend des pales radiales 18 s'étendant entre une plate-forme annulaire radialement interne 20 et une plate-forme annulaire radialement externe 22 et chaque rangée annulaire d'aubes mobiles 12 comprend une pluralité de pales 24 s'étendant radialement vers l'extérieur depuis une plate-forme annulaire radialement interne 26. On comprend que chaque plate-forme annulaire peut être formée d'une succession de plates-formes élémentaires juxtaposées circonférentiellement bout à bout. Comme cela est bien visible sur la figure 1, un carter 28 annulaire entoure extérieurement les rangées annulaires d'aubes de stator 14 et de rotor 12 et permet de supporter les plates-formes radialement externes 22 des rangées annulaires d'aubes de stator 14. Est également représentée la liaison reliant la rangée annulaire d'aubes mobiles 12 amont à une rangée annulaire mobiles 12 aval agencée axialement en aval de la rangée annulaire d'aubes de stator 14. Cette liaison 30 porte des léchettes 32 annulaires coopérant à étanchéité avec un anneau 34 en matériau abradable porté par une face radialement interne 36 de la plate-forme radialement interne 20 de la rangée annulaire d'aubes de stator 14.

Comme cela ressort à l'évidence de la figure 1, lorsque le flux d'air compressé 38 circule d'amont AM en aval AV, une partie de l'air de la veine 40 annulaire d'air primaire peut circuler entre l'extrémité aval 20b (figure 2) de la plate-forme annulaire 20 de la rangée annulaire d'aubes de stator 14 et l'extrémité aval 26b de la plate-forme 26 annulaire de la rangée annulaire aval d'aubes mobiles 12. Cet air peut circuler entre les léchettes 32 annulaires et l'anneau 34 abradable et être réintroduit dans la veine annulaire 40 entre l'extrémité aval 26b de la plate-forme 26 de la rangée annulaire amont d'aubes mobiles 12 et l'extrémité amont 20a de la rangée annulaire d'aubes de stator 14. Le document WO2011/148101 divulgue une réintroduction d'air dans une vaine annulaire selon l'état de la technique.

Cette réinjection d'air est réalisée à un certain débit avec une certaine vitesse et une certaine direction. Il s'avère que cet écoulement 42 qui est un écoulement d'air parasite dont la direction n'est pas maitrisée peut avoir un impact important sur les performances et l'opérabilité du compresseur 10 en mode stabilisé.

Egalement, il est important de bien maitriser l'écoulement dans le compresseur 10 lors des phases transitoires (accélération suivie d'une décélération puis d'une ré-accélération par exemple) afin de pouvoir améliorer les taux d'accélération/décélération du turboréacteur et donc sa réactivité. Hors, il s'avère que l'écoulement secondaire parasite 42 radialement à l'intérieur de la rangée annulaire d'aubes de stator 14 a un impact sur l'opérabilité en phase transitoire. En effet, l'air en rotation possède une certaine inertie qui n'est pas la même que celle dans la veine 40, de sorte que l'air parasite réinjecté n'est alors pas adapté en termes d'orientation aux aubages statoriques 14. Cela peut conduire à des décollements de l'air au niveau de la plate-forme annulaire 20 interne des aubes statoriques 14, réduisant les performances et l'opérabilité du compresseur 10. En effet, l'air réinjecté qui est en rotation autour de l'axe longitudinal X (figure 2) possède une inertie importante et une direction presque entièrement tangentielle qui peut provoquer un décollement de l'air s'écoulant sur les aubages du stator 14 en pied de pale 18 et réduit la marge au pompage du compresseur 10.

En pratique, lorsque l'air 42 est réinjecté en amont de la rangée annulaire d'aubes statoriques 14, la dégradation des performances du compresseur 10 se manifeste de deux manières principales :
- Dans la section radiale, au niveau de la zone 44 de réinjection d'air, la circulation d'air dans la veine 40 peut être obstruée au niveau du pied 46 de la pale 18. Il s'ensuit que la répartition de débit d'air sur la dimension radiale de la pale 18 n'est pas celle attendue. La zone annulaire d'air dont le débit est réduit, c'est-à-dire la zone annulaire au niveau du pied 46 de la pale 18 conduit à fragiliser d'une part les aubes statoriques 14 par injection d'un débit d'air 42 n'ayant pas la bonne incidence et amenant à des décollements, et d'autre part les aubages de la rangée annulaire d'aubes mobiles 12 amont par augmentation locale de la pression statique pouvant amener le rotor à fonctionner plus proche de sa limite de pompage.
- Le vecteur vitesse du flux d'air réinjecté 42 à l'amont de la rangée annulaire d'aubes de stator 14 influe sur l'orientation du flux d'air principal 38 de la veine 40 annulaire de sorte que l'orientation des pales 18 statoriques n'est pas optimale, ce qui conduit à réduire la marge au pompage.

S'il est bien évidemment souhaitable de limiter au mieux la recirculation d'air 42, l'expérience démontre qu'une recirculation 42 parasite subsiste. Il convient alors de la prendre en compte dans la conception du compresseur 10 afin que le fonctionnement nominal du compresseur 10 en soit le moins affecté possible.

### RESUME DE L'INVENTION

La présente invention concerne tout d'abord un étage d'aubes s'étendant autour d'un axe longitudinal destiné à être monté dans un compresseur de turbomachine, l'étage comprenant une rangée annulaire d'aubes mobiles agencée en amont d'une rangée annulaire d'aubes de stator, la rangée annulaire d'aubes de stator comportant une plateforme annulaire radialement interne qui porte des pales radiales et dont une partie annulaire amont est agencée en amont desdites pales et est entourée radialement vers l'extérieur par une partie annulaire aval d'une plateforme annulaire de la rangée annulaire amont d'aubes mobiles, la partie annulaire amont de la plateforme annulaire de la rangée annulaire d'aubes de stator comprenant une face annulaire radialement externe depuis laquelle s'étendent des ailettes réparties autour de l'axe longitudinal et s'étendant radialement vers l'extérieur vers la partie annulaire aval de la plateforme de la rangée annulaire d'aubes mobiles.

L'invention propose ainsi d'ajouter des ailettes dans un espace annulaire délimité entre deux parties annulaires de plateformes d'une rangée annulaire amont d'aubes mobiles et d'une rangée annulaire aval d'aubes de stator afin de permettre un guidage optimal de l'air réinjecté dans la veine annulaire d'air. Egalement, les ailettes permettent un guidage optimal de l'air en entrée de la grille d'aubes de stator.

L'utilisation d'ailettes ayant un profil avec un bord d'attaque et de fuite reliés l'un à l'autre par une face d'intrados et une face d'extrados permet de contrôler l'orientation circonférentielle du débit d'air réinjecté en amont de la grille d'aubes de stator afin que celui-ci soit convenablement orienté pour ne pas perturber l'écoulement d'air dans la veine annulaire d'air et vienne ainsi impacter au mieux les bords d'attaque des pales de la rangée annulaire d'aubes statoriques.

La configuration d'étage ainsi proposée permet d'améliorer la marge au pompage du compresseur, en particulier dans les phases transitoires successives (accélération puis décélération suivie d'une accélération). En effet, au début de la décélération, l'air dans la cavité possède toujours une inertie importante (et donc une composante tangentielle importante) alors que le débit d'air dans la veine est plus faible. Dans cette situation, l'incidence en pied du redresseur est importante, ce qui le rend plus sensible au phénomène de décollement. Les ailettes permettent ainsi de limiter les décollements en pied du redresseur et donc d'améliorer la marge au pompage du compresseur.

Selon une autre caractéristique les ailettes comprennent chacune une face d'intrados et une face d'extrados orientées circonférentiellement de manière identique aux faces d'intrados et d'extrados des pales des aubes de stator. Selon l'invention, les ailettes sont ainsi paramétrés, c'est-à-dire conformées en trois dimensions comme des aubes, à savoir avec une loi de corde, une loi de squelette et une loi d'épaisseur.

Avec une rangée annulaire d'ailettes, la fonction de redresseur de l'air issu de la cavité amont permet de réduire les pertes aérodynamiques dans cette zone, de rendre le guidage plus efficace, et permet également d'avoir un effet positif plus important sur l'écoulement dans la veine et la rangée annulaires d'aubes de stator de la veine, ce qui correspond au but final d'amélioration de l'écoulement d'air et par suite d'amélioration du rendement.

Egalement, l'angle β1 entre l'axe longitudinal et la tangente à la ligne de cambrure moyenne au niveau du bord d'attaque des ailettes est compris entre 45° et 90°, de préférence de l'ordre de 80° à 90°, préférentiellement de l'ordre de 85°.

La ligne de cambrure moyenne est la succession de points situés à mi-distance entre l'extrados et l'intrados telle que mesurée perpendiculairement à cette même ligne. L'air de recirculation en rotation ayant une forte composante tangentielle, le choix de l'angle tel qu'indiqué permet de faciliter la circulation d'air en entrée des ailettes.

Selon une autre caractéristique, l'angle β2 entre l'axe longitudinal et la tangente à la ligne de cambrure moyenne au niveau du bord de fuite des ailettes est de l'ordre de l'angle d'attaque entre l'axe longitudinal et la tangente à la ligne de courbure moyenne au niveau du bord d'attaque d'une pale de la rangée d'aube de stator.

Cette orientation préférentielle au bord de fuite des ailettes permet de faciliter la réintroduction de l'air de recirculation avec une bonne orientation en entrée de l'étage d'aubes de stator, de manière à limiter les décollements d'air en pied des pales des aubes de stator.

Dans un compresseur cet angle β2 est compris entre 10° et 75° et peut être de l'ordre de 55°.

Le pas relatif définit par S/C, où S est la distance entre deux bords d'attaque de deux ailettes circonférentiellement adjacentes et C est la corde d'une ailette, sera de préférence déterminé de manière à ne pas provoquer de blocage sonique.

Celui-ci sera choisi compris entre 0,3 et 0,9 de manière à ce que l'écoulement de l'air dans la grille d'ailettes ne provoque pas de blocage sonique et des pertes aérodynamiques associées.

Dans une réalisation pratique de l'invention, la face annulaire externe de la partie annulaire amont présente une forme tronconique à section augmentant vers l'aval.

Cette face annulaire externe peut être inclinée d'un angle alpha par rapport à l'axe longitudinal compris entre 0° et 90°, préférentiellement compris entre 10° et 45°, plus préférentiellement de l'ordre de 30°.

Selon une autre caractéristique, la face annulaire externe de la partie annulaire amont présente une forme tronconique à section augmentant vers l'aval.

L'inclinaison de la face annulaire supportant les ailettes permet de contrôler l'orientation angulaire par rapport à l'axe longitudinal (c'est-à-dire l'axe de la turbomachine) et dans un plan radial du débit réinjecté. Cette face annulaire inclinée limite également les réintroductions d'air à cet endroit dans les phases de fonctionnement stabilisées et transitoires.

L'invention concerne également un compresseur de turbomachine comprenant au moins un étage selon l'une des revendications précédentes, dans lequel une rangée annulaire aval d'aubes mobiles est agencée axialement en aval de la rangée annulaire d'aubes de stator et est reliée à la rangée annulaire d'aubes mobiles amont au moyen d'une virole annulaire s'étendant radialement à l'intérieur de la rangée annulaire d'aubes de stator et portant des léchettes coopérant à étanchéité avec un anneau de matériau abradable porté par une plate-forme annulaire radialement interne de la rangée annulaire d'aubes de stator.

Egalement l'invention concerne aussi une turbomachine comprenant un compresseur selon la revendication précédente.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1, déjà décrite précédemment, est une illustration schématique d'une partie d'un compresseur d'une turbomachine ;
- la figure 2 est une illustration schématique d'une partie d'un compresseur selon l'invention ;
- la figure 3 est une vue schématique selon l'axe longitudinal de la rangée annulaire d'aubes de stator de la figure 2 ;
- la figure 4 est une vue schématique depuis le dessus d'ailettes selon l'invention ;

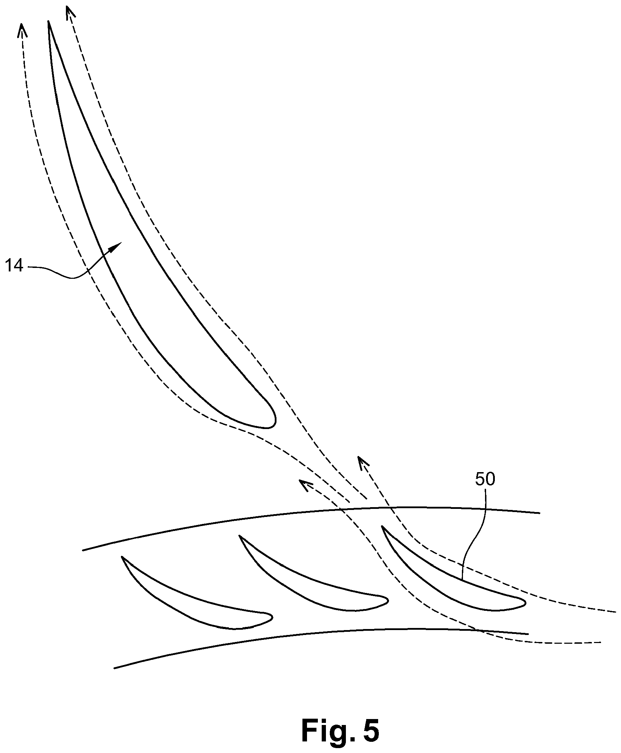

- la figure 5 est une vue schématique de l'écoulement d'air au travers d'ailettes dans la configuration selon l'invention.

### DESCRIPTION DETAILLEE

Dans le présent document, les termes interne et externe ainsi que les termes intérieur et extérieur sont à interpréter relativement à l'axe longitudinal X. Egalement, les termes amont et aval sont à interpréter relativement au sens d'écoulement du flux d'air. Egalement, le terme annulaire qualifie des pièces s'étendant angulairement autour de l'axe longitudinal X sans que nécessairement ces pièces soient formées d'une seule pièce. Ainsi, une plate-forme annulaire, c'est-à-dire qui s'étend annulairement, peut comprend une pluralité de plateformes élémentaires agencées bout à bout sans que nécessairement les extrémités desdites plateformes élémentaires soient jointives entre elles. La forme générale de la plateforme est tout de même annulaire.

La figure 2 représente un étage 16 de compresseur 10 d'axe longitudinal X comprenant une rangée annulaire d'aubes de rotor 12 amont et une rangée annulaire d'aubes de stator 14 aval. La rangée annulaire d'aubes de stator 14 est montée en amont de la rangée annulaire d'aubes de rotor 12 de l'étage 16 aval. Comme cela est bien représenté, les pales 24 des aubes mobiles 12 et les pales 18 des aubes de stator 14 s'étendent radialement vers l'extérieur depuis une plateforme annulaire radialement interne 20, 26. La plateforme annulaire interne 20 de la rangée annulaire d'aubes de stator 14 comprend une partie annulaire amont 20c agencée en amont des pales 18 statoriques et une partie annulaire aval 20d agencée en aval desdites pales 18 statoriques. De même, la plateforme annulaire 26 de la rangée annulaire d'aubes de rotor 12 amont ainsi que la plateforme annulaire 26 de la rangée annulaire d'aubes de rotor 12 aval comprennent chacune des parties annulaires amont 26c et aval 26d agencées en amont et en aval, respectivement des pales 24. Comme cela est visible sur la figure 2, on observe que la partie annulaire amont 20c de la plateforme annulaire 20 de la rangée annulaire d'aubes statorique est agencée radialement à l'intérieur de la partie annulaire aval 26b de la plateforme annulaire 26 de la rangée annulaires d'aubes mobiles amont.

Egalement, on observe que les rangées annulaires d'aubes de rotor 12 sont reliées l'une à l'autre par une virole 30 annulaire portant des léchettes 32 annulaires coopérant à étanchéité par frottement avec un anneau 34 en matériau abradable, de manière à limiter les circulations d'air de l'aval vers l'amont comme évoqué précédemment en relation avec la figure 1 de la technique antérieure.

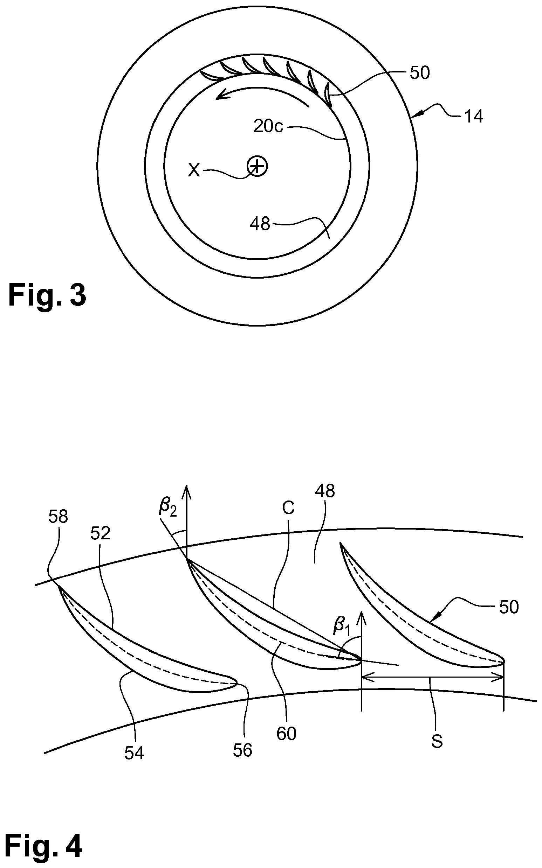

Comme illustré sur la figure 2 et également sur la figure 3, la partie annulaire amont 20c de la plateforme annulaire statorique 20 présente une face annulaire 48 radialement externe qui est inclinée en oblique par rapport à l'axe longitudinal X. Plus spécifiquement, cette face annulaire 48 radialement externe présente une forme tronconique, c'est-à-dire la forme d'un cône de révolution tronqué, ayant une section qui augmente vers l'aval. L'inclinaison alpha de la face annulaire externe par rapport à l'axe longitudinal est comprise entre 5° et 90°, préférentiellement compris entre 10° et 45°, plus préférentiellement de l'ordre de 30°.

Egalement, des ailettes 50 sont formées sur la partie annulaire 20c amont de la plateforme statorique 20, ces ailettes 50 étant régulièrement réparties autour de l'axe longitudinal X et s'étendant radialement vers l'extérieur en direction de la partie annulaire aval 26d de la plateforme mobile 26 amont.

En fonctionnement, l'air parasite 42 qui circule dans l'espace annulaire entre l'extrémité aval 20b de la plateforme statorique 20 et de la plateforme annulaire 26 de la rangée annulaire aval d'aubes mobiles 12 et qui circule au travers du dispositif d'étanchéité à léchettes 32, s'écoule ainsi avec un angle α non nul qui permet de contrôler l'orientation angulaire par rapport à l'axe longitudinal X (c'est-à-dire l'axe de la turbomachine) et dans un plan radial du débit réinjecté et limite les introductions d'air dans l'espace annulaire entre l'extrémité aval 26b de la plateforme annulaire 26 de la rangée annulaire amont d'aubes mobiles 12 et l'extrémité amont 20a de la rangée annulaire d'aubes de stator 14.

Egalement, comme représenté en figure 4, chaque ailette 50 présente une face d'intrados 52 et une face d'extrados 54 reliées l'une à l'autre par un bord d'attaque 56 et un bord de fuite 58. Ces aubes ne présentent ainsi pas un profil symétrique suivant leur corde qui est représenté par la lettre C sur la figure 4. L'orientation des ailettes peut être définit par l'angle β1 au bord d'attaque et l'angle β2 au bord de fuite. Ces angles β1 et β2 sont déterminés dans un plan P perpendiculaire à une normale N à la face annulaire externe 48 de la partie annulaire amont 20c de la plateforme annulaire 20, ce plan P passant par le bord d'attaque 56 de l'ailette (figure 2).

Selon la définition donnée dudit plan P, on comprend que celui-ci est parallèle à une génératrice de la face annulaire externe 48 qui est ici tronconique. On comprend bien que le terme génératrice est utilisé en référence à la définition géométrique générale de la face mais n'indique pas que celle-ci est continu sur 360° comme cela a déjà été expliqué précédemment.

Lorsque la face annulaire externe 48 est incurvée concave avec une concavité tournée radialement vers l'extérieur, on comprend tout l'intérêt de la définition générale du plan P précité.

Mesuré dans le plan P précité, l'angle β1 est celui défini entre l'axe longitudinal X et la tangente à la ligne de cambrure 60 moyenne au niveau du bord d'attaque 56 des ailettes 50 et est compris entre 45° et 90°, de préférence de l'ordre de 80° à 90°, préférentiellement de l'ordre de 85°. Ce choix d'angle permet d'adapter l'incidence des ailettes à l'écoulement de recirculation qui possède une composante tangentielle importante.

Egalement mesuré dans le plan P précité, l'angle β2 est celui défini entre l'axe longitudinal X et la tangente à la ligne de cambrure moyenne au niveau du bord de fuite 58 des ailettes 50 et est de l'ordre de l'angle d'attaque entre l'axe longitudinal X et la tangente à la ligne de courbure moyenne au niveau du bord d'attaque 56 d'une pale 18 de la rangée d'aube de stator 14. On comprend qu'une orientation spécifique du bord d'attaque 56 permet d'orienter le flux d'air de sortie de la grille d'ailettes 50 avec une incidence idéale en direction de la grille d'aubages statoriques 14. L'angle β2 est compris entre 10° et 75° et préférentiellement de l'ordre de 55°.

L'invention permet ainsi de réduire les risques de décollement d'air en pied 46 de pale 18 des aubes statoriques 14, augmentant ainsi la marge au pompage du compresseur 10. L'air réintroduit possède en outre une orientation facilitant son écoulement dans la grille d'aubages de stator 14.

D'un point de vue pratique, les ailettes 50 pourraient être réalisées soit par soudure sur la partie annulaire 20c amont de la plateforme statorique 20 ou bien être réalisées d'une seule pièce avec celle-ci.

Dans une réalisation pratique, le pas relatif définit par S/C sera de préférence déterminé de manière à ne pas provoquer de blocage sonique, entre 0,3 et 0,9, S étant la distance circonférentielle entre deux bords d'attaque 56 de deux ailettes 50 circonférentiellement consécutives et C étant la corde d'une ailette 50.

Dans une réalisation non spécifiquement représenté aux figures, une piste annulaire en matériau abradable peut être formée sur la face annulaire interne de la partie annulaire aval 26b de la plateforme annulaire amont 26 de la rangée annulaire 10 d'aubes de rotor. Les extrémités radialement externes des ailettes seront ainsi adaptées à établir un contact avec l'anneau abradable. Cette configuration s'avérera intéressante dans les cas où il est difficile de garantir une absence de contact entre les ailettes statoriques et le rotor en vis-à-vis radial.

## Revendications

1. Etage d'aubes (16) s'étendant autour d'un axe longitudinal (X) destiné à être monté dans un compresseur (10) de turbomachine, l'étage comprenant une rangée annulaire d'aubes mobiles (12) agencée en amont d'une rangée annulaire d'aubes de stator (14), la rangée annulaire d'aubes de stator (14) comportant une plateforme annulaire radialement interne (20) qui porte des pales (18) radiales et dont une partie annulaire amont (20c) est agencée en amont desdites pales (18) et est entourée radialement vers l'extérieur par une partie annulaire aval (26d) d'une plateforme annulaire (26) de la rangée annulaire amont d'aubes mobiles (12), la partie annulaire amont (20c) de la plateforme annulaire (20) de la rangée annulaire d'aubes de stator (14) comprenant une face annulaire radialement externe (48) depuis laquelle s'étendent des ailettes (50) réparties autour de l'axe longitudinal (X) et s'étendant radialement vers l'extérieur vers la partie annulaire aval (26d) de la plateforme (26) de la rangée annulaire d'aubes mobiles (12), **caractérisé en ce que** les ailettes (50) comprennent chacune une face d'intrados (52) et une face d'extrados (54) orientées circonférentiellement de manière identique aux faces d'intrados et d'extrados des pales (18) des aubes de stator (14).

2. Etage (16) selon la revendication 1, dans lequel l'angle β1 entre l'axe longitudinal (X) et la tangente à la ligne (60) de cambrure moyenne au niveau du bord d'attaque (56) des ailettes (50) est compris entre 45 ° et 90°, de préférence de l'ordre de 80° à 90°, préférentiellement de l'ordre de 85°.

3. Etage selon l'une des revendications 1 à 2, dans lequel l'angle β2 entre l'axe longitudinal (X) et la tangente à la ligne de cambrure moyenne au niveau du bord de fuite (58) des ailettes (50) est de l'ordre de l'angle d'attaque entre l'axe longitudinal (X) et la tangente à la ligne de cambrure moyenne au niveau du bord d'attaque d'une pale (18) de la rangée d'aube de stator (14).

4. Etage selon la revendication 3, dans lequel l'angle β2 est compris entre 10° et 75° et préférentiellement de l'ordre de 55°.

5. Etage selon l'une des revendications 1 à 4, dans lequel la face annulaire externe (48) de la partie annulaire amont (20a) présente une forme tronconique à section augmentant vers l'aval.

6. Etage (16) selon la revendication 5, dans lequel ladite face annulaire (48) est inclinée d'un angle alpha par rapport à l'axe longitudinal (X) compris entre 0° et 90°, préférentiellement compris entre 10° et 45°, plus préférentiellement de l'ordre de 30°.

7. Etage selon l'une des revendications 1 à 6, dans lequel le pas relatif définit par le rapport S/C est compris entre 0,3 et 0,9 où S est la distance entre deux bords d'attaque de deux ailettes circonférentiellement adjacentes et C est la corde d'une ailette.

8. Compresseur (10) de turbomachine comprenant au moins un étage (16) selon l'une des revendications précédentes, dans lequel une rangée annulaire aval d'aubes mobiles (12) est agencée axialement en aval de la rangée annulaire d'aubes de stator (14) et est reliée à la rangée annulaire d'aubes mobiles (12) amont au moyen d'une virole (30) annulaire s'étendant radialement à l'intérieur de la rangée annulaire d'aubes de stator (14) et portant des léchettes (32) coopérant à étanchéité avec un anneau (34) de matériau abradable porté par une plate-forme annulaire radialement interne (20) de la rangée annulaire d'aubes de stator (14).

9. Turbomachine comprenant un compresseur (10) selon la revendication précédente.

## Patentansprüche

1. Schaufelstufe (16), die sich um eine Längsachse (X) herum erstreckt und dazu bestimmt ist, in einen Verdichter (10) für Turbomaschinen bzw. Turbotriebwerke eingebaut zu werden, wobei die Stufe eine ringförmige Reihe beweglicher Schaufeln (12) umfasst, die stromaufwärts von einer ringförmigen Reihe von Statorschaufeln (14) angeordnet ist, wobei die ringförmige Reihe von Statorschaufeln (14) eine radial innere ringförmige Plattform (20) aufweist, die radiale Schaufelblätter (18) trägt und von der ein stromaufwärts gelegener Ringabschnitt (20c) stromaufwärts von den Schaufelblättern (18) angeordnet ist und radial nach außen von einem stromabwärts gelegenen Ringabschnitt (26d) einer ringförmigen Plattform (26) der stromaufwärts gelegenen ringförmigen Reihe von beweglichen Schaufeln (12) umgeben ist, wobei der stromaufwärts gelegene Ringabschnitt (20c) der ringförmigen Plattform (20) der ringförmigen Reihe von Statorschaufeln (14) eine radial äußere Ringfläche (48) aufweist, von der aus sich Rippen (50) erstrecken, die um die Längsachse (X) herum verteilt sind und sich radial nach außen in Richtung des stromabwärts gelegenen Ringabschnitts (26d) der Plattform (26) der ringförmigen Reihe von beweglichen Schaufeln (12) erstrecken, **dadurch gekennzeichnet, dass** die Rippen (50) jeweils eine Druckseitenfläche (52) und eine Saugseitenfläche (54) aufweisen, die in Umfangsrichtung identisch mit der Druckseiten- und der Saugseitenfläche der Schaufelblätter (18) der Statorschaufeln (14) ausgerichtet sind.

2. Stufe (16) nach Anspruch 1, wobei der Winkel β1 zwischen der Längsachse (X) und der Tangente an die Wölbungsmittellinie (60) im Bereich der Vorderkante (56) der Rippen (50) zwischen 45° und 90°, vorzugsweise in der Größenordnung von 80° bis 90°, bevorzugt in der Größenordnung von 85° liegt.

3. Stufe nach einem der Ansprüche 1 bis 2, wobei der Winkel β2 zwischen der Längsachse (X) und der Tangente an die Wölbungsmittellinie im Bereich der Hinterkante (58) der Rippen (50) in der Größenordnung des Anströmwinkels zwischen der Längsachse (X) und der Tangente an die Wölbungsmittellinie im Bereich der Vorderkante eines Schaufelblatts (18) der Reihe von Statorschaufeln (14) liegt.

4. Stufe nach Anspruch 3, wobei der Winkel β2 zwischen 10° und 75° und vorzugsweise in der Größenordnung von 55° liegt.

5. Stufe nach einem der Ansprüche 1 bis 4, wobei die äußere Ringfläche (48) des stromaufwärts gelegenen Ringabschnitts (20a) eine kegelstumpfförmige Gestalt mit stromabwärts zunehmendem Querschnitt aufweist.

6. Stufe (16) nach Anspruch 5, wobei die Ringfläche (48) um einen Winkel alpha zur Längsachse (X) zwischen 0° und 90°, vorzugsweise zwischen 10° und 45°, besonders bevorzugt in der Größenordnung von 30°, geneigt ist.

7. Stufe nach einem der Ansprüche 1 bis 6, wobei die durch das Verhältnis S/C definierte relative Steigung zwischen 0,3 und 0,9 liegt, wobei S der Abstand zwischen zwei Vorderkanten von zwei in Umfangsrichtung benachbarten Rippen und C die Sehne einer Rippe ist.

8. Verdichter (10) für Turbomaschinen bzw. Turbotriebwerke mit mindestens einer Stufe (16) nach einem der vorhergehenden Ansprüche, wobei eine stromabwärts gelegene ringförmige Reihe beweglicher Schaufeln (12) axial stromabwärts von der ringförmigen Reihe von Statorschaufeln (14) angeordnet und mit der stromaufwärts gelegenen ringförmigen Reihe beweglicher Schaufeln (12) mittels eines Mantelrings (30) verbunden ist, der sich radial innerhalb der ringförmigen Reihe von Statorschaufeln (14) erstreckt und Dichtleisten (32) trägt, die abdichtend mit einem Ring (34) aus Abriebsmaterial zusammenwirken, der von einer radial inneren ringförmigen Plattform (20) der ringförmigen Reihe von Statorschaufeln (14) getragen wird.

9. Turbomaschine bzw. Turbotriebwerk mit einem Verdichter (10) nach dem vorangehenden Anspruch.

## Claims

1. Vane stage (16), extending around a longitudinal axis (X), designed to be fitted in a turbine engine compressor (10), wherein the stage comprises an annular row of mobile vanes (12) arranged upstream from an annular row of stator vanes (14), wherein the annular row of stator vanes (14) comprises a radially internal annular platform (20) bearing radial blades (18), an upstream annular portion (20c) of which is arranged upstream from said blades (18) and is surrounded radially outwards by a downstream annular portion (26d) of an annular platform (26) of the upstream row of mobile vanes (12), wherein the upstream annular portion (20c) of the annular platform (20) of the annular row of stator vanes (14) comprises a radially external annular face (48) from which fins (50) extend, said fins (50) are distributed around the longitudinal axis (X) and extend radially outwards towards the downstream annular portion (26d) of the platform (26) of the annular row of mobile vanes (12), **characterised in that** the fins (50) each comprise an intrados face (52) and an extrados (54) face oriented circumferentially in an identical manner to the intrados faces and extrados faces of the blades (18) of the stator vanes (14).

2. Stage (16) according to claim 1, wherein the angle β1 between the longitudinal axis (X) and the tangent to the mean camber line (60) at the leading edge (56) of the fins (50) is between 45° and 90°, preferably on the order of 80° to 90°, preferably on the order of 85°.

3. Stage according to either of claims 1 to 2, wherein the angle β2 between the longitudinal axis (X) and the tangent to the mean camber line at the trailing edge (58) of the fins (50) is on the order of the leading angle between the longitudinal axis (X) and the tangent to the mean camber line at the leading edge of a blade (18) in the row of stator vanes (14).

4. Stage according to claim 3, wherein the angle β2 is between 10° and 75° and preferentially on the order of 55°.

5. Stage according to any of claims 1 to 4, wherein the external annular face (48) of the upstream annular portion (20a) is tapered with a truncated section increasing in the downstream direction.

6. Stage (16) according to claim 5, wherein said annular face (48) is inclined by an alpha angle relative to the longitudinal axis (X) of between 0° and 90°, preferably between 10° and 45° and more preferably on the order of 30°.

7. Stage according to any of claims 1 to 6, wherein the relative pitch defined by the ratio S/C is between 0.3 and 0.9, where S is the distance between two leading edges of two circumferentially adjacent fins and C is the string of a fin.

8. Turbine engine compressor (10) comprising at least one stage (16) according to any of the preceding claims, wherein a downstream annular row of mobile vanes (12) is arranged axially downstream from the annular row of stator vanes (14) and is connected to the annular row of mobile vanes (12) upstream by means of an annular shroud (30) extending radially inside the annular row of stator vanes (14) and bearing lips (32) sealedly interacting with a ring (34) of abradable material borne by a radially internal annular platform (20) of the annular row of stator vanes (14).

9. Turbine engine comprising a compressor (10) according to the preceding claim.
